# EUROPEAN PATENT SPECIFICATION

(11) **EP 4 070 696 B1**
(45) Date of publication and mention of the grant of the patent: **05.02.2025**
(21) Application number: 19868160.3
(22) Date of filing: 06.12.2019
(51) Int. Cl.: A47J 31/36

(54) **BREWING DEVICE AND BEVERAGE DISPENSER THEREWITH**
BRÜHVORRICHTUNG UND GETRÄNKESPENDER DAMIT
DISPOSITIF D'INFUSION ET DISTRIBUTEUR DE BOISSON COMPORTANT CELUI-CI

(30) Priority: 02.12.2019 CN 201911214532
(43) Date of publication of application: 12.10.2022
(73) Proprietor: Cino Technology (Shenzhen) Limited, Shenzhen, Guangdong 518104 (CN)
(72) Inventor: ZHANG, Yuanxian, Shenzhen Guangdong 518104 (CN); LI, Ke, Shenzhen Guangdong 518104 (CN)
(74) Representative: Heimdal, Pär
(86) International application number: PCT/CN2019/123767
(87) International publication number: WO 2021/109146

(56) References cited:
- CN-A- 102 028 409
- CN-A- 104 095 542
- CN-A- 110 367 825
- CN-A- 110 367 825
- CN-U- 201 822 645
- CN-U- 202 714 727
- CN-U- 202 714 728
- CN-U- 203 468 345
- CN-U- 204 862 676
- CN-U- 208 425 949
- CN-U- 209 610 856
- CN-U- 210 540 908
- DE-B4- 102010 063 898
- US-A- 5 794 519
- US-A1- 2006 123 998
- US-A1- 2006 123 998
- US-B2- 8 733 229

## Description

### TECHNICAL FIELD

The embodiments of the invention relate to the technical field of beverage brewing, in particular to a brewing device and a beverage machine.

### BACKGROUND

Coffee is one of the three major beverages in the world, and communities of coffee drinkers have been growing all around the world. The ever-increasing popularity of coffee machines renders a more convenient and simpler preparation of coffee, which is followed by every moment of life full of the flavor of coffee.

Capsule coffee machines are one type of coffee machines, a manufacturer packs coffee powder into a plastic capsule box similar to a pudding box, and then charges an inert gas to preserve freshness. A cup of fragrant coffee is prepared soon after a capsule is inserted into a machine. In comparison with a semi-automatic coffee machine or a full-automatic coffee machine using coffee powder, the operation of the capsule coffee machine is quite simple and convenient. The capsule coffee machine in the broad sense can not only make coffee, but also make natural flower and fruit tea, etc.

Various capsule coffee machines are currently available from the market, generally provided with a base, a capsule holder for holding a capsule, an injection module for piercing a capsule membrane and injecting hot water, and a power module for driving the injection module to move along a preset direction. Some capsule coffee machines adopt drawer-type capsule holders which can move relative to the base of the coffee machine, when a capsule is to be added, the capsule holder is pulled out from the base of the coffee machine, then the capsule is placed into specific accommodating cavities, and then the capsule holder is pushed back to the original position. Capsule coffee machines are also known from US8733229B2, US5794519A and US2006/123998A1.

However, the inventor(s) of the invention found during implementing the invention that: for the capsule coffee machine with such a structure, after the coffee is prepared, the used capsule box cannot be automatically recovered, the user has to take out the capsule box where the brewed liquid is adhered, and this may leads to a poor user experience.

### SUMMARY

It's an object of embodiments of the invention to solve the technical problem that the used capsule boxes cannot be automatically recovered for the capsule coffee machine with the drawer-type capsule holder by providing a brewing device and a beverage machine.

The technical problem is solved by implementing:

A brewing device in accordance with independent claim 1. Further improvements to the brewing device are recited in the dependent claims.

The technical problem is also solved by implementing:

a beverage machine according to claim 10, including the brewing device according to any of the claims 1-9.

The invention has the following advantages:

The brewing device provided by the embodiments of the invention includes a base, a capsule holder, an injection module, a sliding rail and a driving module. The capsule holder is provided with an accommodating cavity for receiving the capsule; one end of the sliding rail is carried on the capsule holder and used for carrying the capsule, and the other end of the sliding rail is rotatably mounted on the capsule holder. After the brewing process is complete, when the injection module is getting away from the capsule holder along a preset direction, the driving module can drive the sliding rail to rotate together, so that one end of the sliding rail carried on the capsule holder gets away from the capsule holder, the sliding rail carries the capsule away from the accommodating cavity of the capsule holder, and the capsule slides down to a designated position along the sliding rail.

Therefore, in comparison with the brewing device in the capsule coffee machine currently available on the market, the brewing device provided by the embodiments of the invention can realize the automatic recovery of the capsule after the brewing is complete, without manual operation of a user, and thus the user experience is effectively improved.

### BRIEF DESCRIPTION OF THE DRAWINGS

In order to more clearly illustrate the technical solutions of the embodiments of the invention, the drawings used in the description of the present embodiments are briefly described below, and it is obvious that the drawings in the description below illustrate only some of the present embodiments of the invention, and that other drawings can be obtained from the structures shown in the drawings without involving any inventive effort for a person skilled in the art.
FIG. 1 is a perspective view of a brewing device according to an embodiment from an angle, said embodiment not being part of the present invention;
FIG. 2 is a perspective view of the brewing device of FIG. 1 in its brewing working position with side plates not shown;
FIG. 3 is a perspective view of the brewing device of FIG. 1 in its sliding-down working position with a base not shown;
FIG. 4 is a perspective view of the base of FIG. 1;
FIG. 5 is a perspective view of a capsule holder of FIG. 2;
FIG. 6 is a perspective view of an injection module of FIG. 2;
FIG. 7 is a perspective view of a sliding rail of FIG. 2;
FIG. 8 is a schematic view showing the connection of the sliding rail and the capsule holder of FIG. 2;
FIG. 9 is a schematic view showing a straight sliding rail and the sliding rail having a bent part being respectively rotated until their ends proximate to a cup holder reach the same height;
FIG. 10 is a partially enlarged view at A in FIG. 3;
FIG. 11 is a perspective view of a brewing device according to an embodiment of the invention;
FIG. 12 is a perspective view of the injection module of FIG. 11;
FIG. 13 is a perspective view of the sliding rail of FIG. 11;
FIG. 14 is a perspective view of a brewing device according to yet another embodiment of the invention from an angle;
FIG. 15 is a perspective view of the brewing device of FIG. 14 from another angle;
FIG. 16 is a perspective view of the sliding rail of FIG. 15;
FIG. 17 is a partially enlarged view at B in FIG. 15;
FIG. 18 is a perspective view of a brewing device according to still another embodiment with the side plates not shown, said embodiment not being part of the present invention;
FIG. 19 is a partially enlarged schematic view at C in FIG. 18.

### DETAILED DESCRIPTION

In order that the invention may be readily understood, a more particular description of the invention will be rendered by reference to the accompanied drawings and embodiments. It should be noted that when an element is "secured to/fixedly connected with" another element, it can be a direct relationship or there can be one or more intervening elements therebetween. When an element "connects" another element, it can be directly connected with the element or there can be one or more intervening elements therebetween.

Unless defined otherwise, all technical and scientific terms used herein have the same meaning as commonly understood by one of ordinary skill in the art to which this invention belongs.

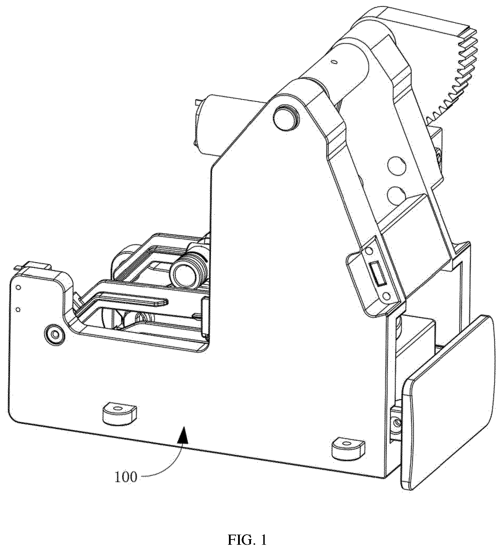

With reference to FIGS. 1 to 3, a perspective view of a brewing device according to an embodiment from an angle, said embodiment not being part of the present invention, a perspective view of the brewing device in its brewing working position with side plates not shown, and a perspective view of the brewing device in its sliding-down working position with a base not shown are presented, the brewing device including a base 100, a capsule holder 200, an injection module 300, a power module 400, a sliding rail 500 and a driving module. Wherein, the base 100 is provided with a passage; the capsule holder 200, at least partially received in the passage, is slidably mounted on the base 100, capable of directionally sliding along the passage. The injection module 300 is movably connected with the base 100 and can get close to or away from the capsule holder 200 in a preset direction. The power module 400 is connected with the injection module 300 for driving the injection module 300 to get close to or away from the capsule holder 200 in the preset direction. One end of the sliding rail 500 is carried at one end of the capsule holder 200 proximate to the injection module 300 and used for carrying a flange of a capsule 700; the other end of the sliding rail 500 is rotatably mounted on the capsule holder 200. The driving module is configured to drive the sliding rail 500 to rotate when the injection module 300 is getting away from the capsule holder 200 in the preset direction, so that the end of the sliding rail 500 carried on the capsule holder 200 gets away from the capsule holder 200.

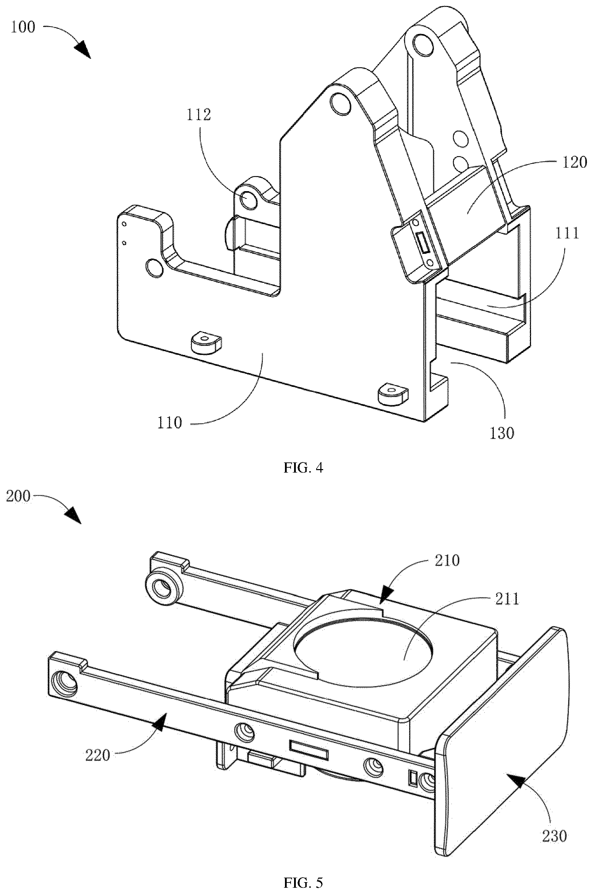

With regard to the base 100, reference is made to FIG. 4 which shows a perspective view of the base 100 in combination with FIGS. 1 to 3, the base 100 includes two oppositely disposed side plates 110, and a connecting plate 120 having both ends connected with the two side plates 110, respectively. Each side plate 110 is vertically disposed, and the connecting plate 120 is used for connecting the two side plates 110 so that the two side plates 110 are oppositely arranged and fixed relative to each other, thereby forming the above-mentioned passage 130.

With regard to the capsule holder 200, reference is made to FIG. 5 which shows a perspective view of the capsule holder 200 in combination with FIGS. 1 to 4, the capsule holder 200 includes a cup holder 210, a slider 220, and a push plate 230. An accommodating cavity 211 for accommodating the capsule 700 is provided at the end, proximate to the injection module 300, of the cup holder 210 (i.e., the top as shown). The slider 220 is generally strip-shaped, the two sliders 220 are arranged on two opposite sides of the cup holder 210 in parallel, and the sliders 220 extend in a direction extending parallel to the passage 130. The two side plates 110 are respectively provided at one end facing the passage 130 with guide grooves 111 adapted to the sliders 220 and extending in a direction extending parallel to the passage 130, and the pair of sliders 220 are mated with the pair of guide grooves 111 to ensure that the capsule holder 200 can slide directionally in the passage 130. The push plate 230 is fixedly connected with one end of the slider 220 and facilitates pulling the capsule holder 200 out of the accommodating cavity 211 to the exterior of the passage 130 for the capsule 700 to fill in, as well as pushing the capsule holder 200 into a set position to conduct the subsequent brewing process.

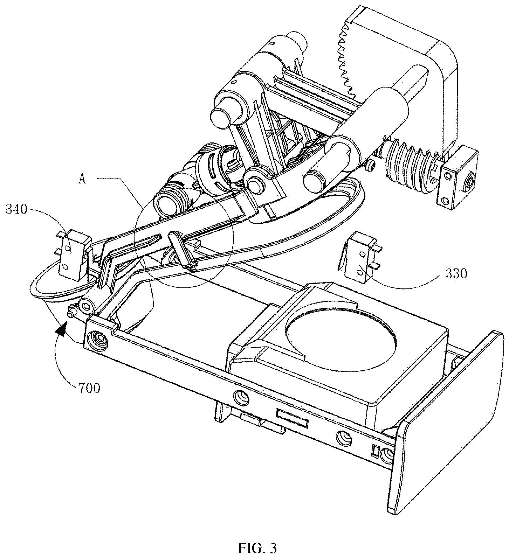

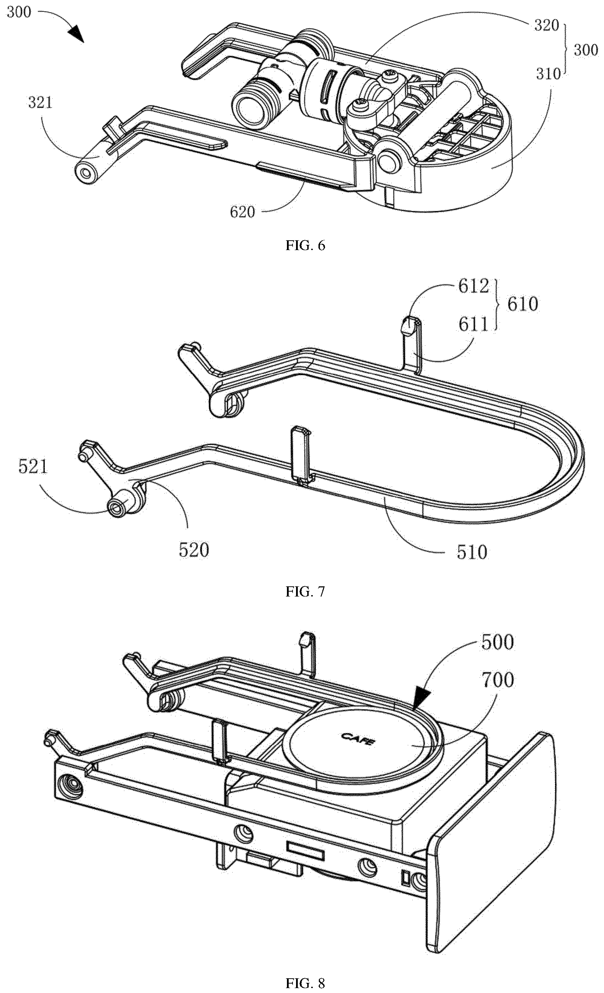

With regard to the injection module 300 described above, reference is made to FIG. 6 which shows a perspective view of the injection module 300 in combination with FIGS. 1 to 5, the injection module 300 includes an injection component 310 and a connecting arm 320. The injection component 310 is disposed in the passage 130 and positioned on one side of the capsule holder 200 where the accommodating cavity 211 is provided, specifically, above the accommodating cavity 211. The injection component 310 serves to pierce a sealing membrane of the capsule 700 and inject boiled water into the capsule 700 to complete the brewing process. One end of the connecting arm 320 is fixedly connected with the injection component 310, and the other end of the connecting arm 320 extends away from the push plate 230 in a direction parallel to the passage 130 and is rotatably mounted on the base 100; that is, the direction in which the injection module 300 rotates in the present embodiment is the preset direction described above. In the present embodiment, the number of the connecting arms 320 is two, and the two connecting arms 320 are respectively arranged on two sides of the injection component 310 along the direction of width of the passage 130; one end of each connecting arm 320 distal to the injection component 310 is connected with a rotating shaft 321, the side plate 110 is provided with a rotating hole 112 (FIG. 4) matched with the rotating shaft 321, and the connecting arm 320 and the side plate 110 are rotatably connected through the matching of the rotating shaft 321 and the rotating hole. At the brewing working position, the injection module 300 is positioned close to an opening of the accommodating cavity 211, and generally, almost parallel to the capsule holder 200; starting from such a position, the injection module 300 reaches the sliding-down working position (shown in FIG. 3) after being rotated by a preset angular displacement in a direction away from the accommodating cavity 211. It will be appreciated that in other embodiments of the invention, the connecting arm 320 may be rotatably connected with the side plate 110 in other ways. For example, in some embodiments of the invention, the rotating shaft 321 is sleeved with a bearing, an inner race of which is in interference fit with the rotating shaft, and an outer race of which is fixed to the side plate 110, that is, the connecting arm 320 is rotatably connected with the side plate through a bearing.

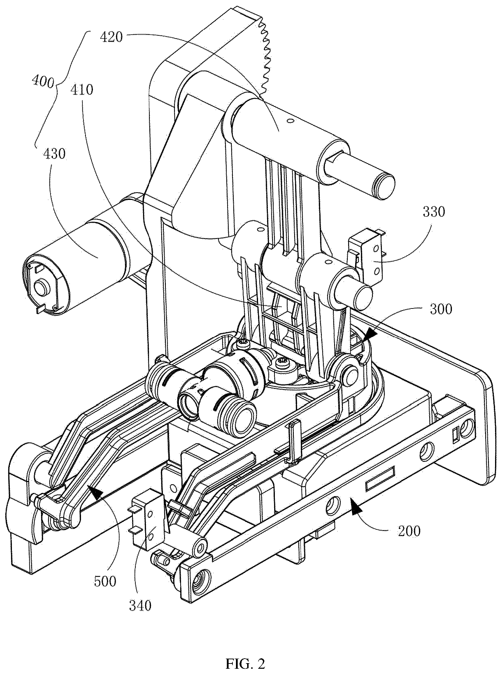

With regard to the power module 400, reference is made to FIG. 2 in combination with FIGS. 1 and 3 to 6, the power module 400 is connected with the injection module 300 and configured to drive the injection module 300 to reciprocate between the brewing working position and the sliding-down working position, and the power module 400 includes a first link 410, a second link 420, and a rotation mechanism 430. One end of the first link 410 is rotatably mounted on the injection component 310 of the injection module, the other end of the first link 410 is rotatably connected with the second link 420, an output end of the rotation mechanism 430 is connected with the second link 420 and configured to drive the second link 420 to rotate; the base 100, the second link 420, the first link 410 and the injection module 300 together form a four bar linkage, so that regular movement of the injection module 300 can be rendered by driving the second link 420 by the rotation mechanism 430. In the present embodiment, the rotation mechanism 430 is an electric motor, and it will be appreciated that in other embodiments of the invention, the rotation mechanism may be any mechanism that can achieve rotational output, such as a rotating cylinder.

Further, the rotation mechanism 430 further includes a worm gear and a worm, through which the rotation mechanism is connected with the second link to reduce the rotation speed of the injection module 300 to a certain extent and avoid damage caused by strong impact between the injection module 300 and the capsule holder 200 due to too fast rotation of the motor. The worm gear is coaxially and fixedly connected with a worm gear shaft, the worm gear shaft is rotatably mounted on the base 100, and the second link is sleeved on and fixed with the worm gear shaft. And the worm is matched with the worm gear and connected with the output end of the rotation mechanism.

With regard to the sliding rail 500, reference is made to FIGS. 7 and 8 which respectively show a perspective view of the sliding rail 500 and a schematic view showing the connection of the sliding rail 500 and the capsule holder 200 in combination with FIGS. 1 to 6, the sliding rail 500 includes a sliding guide part 510, one end of which is carried at one end of the cup holder 210 proximate to the injection component 300, the other end of which extends away from the push plate 230 in a direction extending parallel to the passage 130 and is rotatably mounted on the capsule holder 200. The end of the sliding rail 500 carried on the cup holder 210 is disposed at an edge of a profile of the accommodating cavity 211 and used for carrying the flange of the capsule 700.

Further, the sliding rail 500 further includes a bent part 520 having one end connected with one end of the sliding guide part 510 distal to the accommodating cavity 211 and the other end extending towards a bottom of the base 110. In the present embodiment, one end of the bent part 520 distal to the cup holder 210 extends towards the bottom of the base 100 and gradually gets away from the cup holder 210. Actually, the bent part 520 can be formed by bending a straight sliding rail, and on one hand, the distance between the two ends of the straight sliding rail can be reduced by the configuration of the bent part 520, so that the travel of the capsule 700 is shortened; on the other hand, when the sliding rail 500 is rotated by a certain angle, the capsule 700 slides down, the bent part 520 has a certain inclination angle relative to the sliding guide part 510, and the capsule 700 slides on the bent part 520 with less resistance, so that the bent part 520 can accelerate the falling of the capsule 700 when the capsule 700 slides down to the bent part 520.

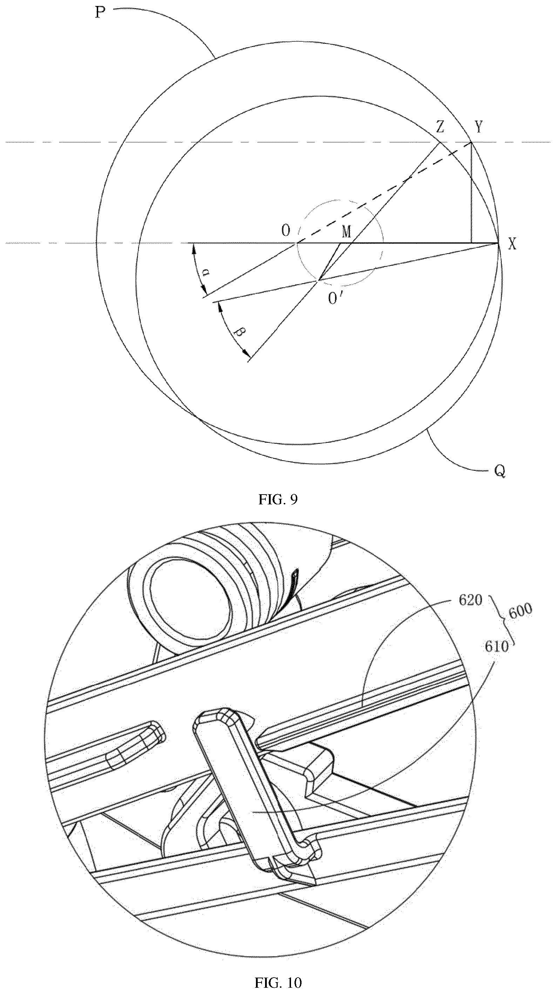

In addition, the sliding rail 500 having the bent part 520 enables a greater inclined angle of the sliding guide part 510 when the end of the sliding rail 500 carried at one end of the cup holder 210 rises by the same height as that of the straight sliding rail having the same total length does. To facilitate understanding, reference is made specifically to FIG. 9 which is a schematic view showing a straight sliding rail and the sliding rail 500 having the bent part 520 being respectively rotated until their ends proximate to the cup holder 210 reach the same height in combination with other drawings. As shown in the drawings, point O and point X respectively represent two ends of the straight sliding rail when the straight sliding rail is horizontal, point Y represents a position of the straight sliding rail after the end thereof proximate to the cup holder being rotated by angle α along a circle centered in point O, and circle P is a movement track of the end of the straight sliding rail proximate to the cup holder, that is, the end of the straight sliding rail proximate to the cup holder 210 is rotated from a horizontal position at point X by angle α to point Y along a circle centered in point O. Similarly, points O' and M represent both ends (O'M = OM) of the bent part 520 of the sliding rail 500 having the bent part, points M and X represent both ends of the sliding guide part 510 of the sliding rail 500 having the bent part, point Z represents the position of the sliding rail 500 having the bent part after its end proximate to the cup holder being rotated by angle β along a circle centered in point O', and points Z and Y are at the same height relative to the horizontal position, and circle Q is a movement track of the end, proximate to the cup base, of the sliding rail 500 having the bent part, namely: the end of the sliding rail with the bent part 520 proximate to the cup holder rotates from a horizontal position point X to point Z by angle β along a circle centered in point O'. The rotation angle of the sliding rail is generally less than 90 degrees, and within such a range, the track of the circle Q is always on the left side of the track of the circle P, then:
Lxz> Lyz, wherein L represents chord length;
and RO'Z<ROY, wherein R represents radius;

In addition, a chord length formula can be combined: L=2R*sin < θ /2) , wherein L represents chord length and θ represents radian;
It can be inferred that β is greater than α, that is, the angle by which the sliding rail 500 having the bent part rotates is greater than the angle by which the straight sliding rail rotates. A horizontal piece has an included angle γ with the horizontal direction after being rotated by angle γ along a circle centered in any point, regardless of the choice of the rotation center, so the angle between the sliding guide part and the horizontal direction is β, which is larger than the included angle α of the straight sliding rail with the horizontal direction. Therefore, the sliding rail 500 having the bent part 520 provided by the present embodiment is more favorable for the capsule 700 to slide down.

Furthermore, in order to render a more reliable process to bring the capsule 700 out of the accommodating cavity 211 by the sliding rail 500, the sliding guide part 510 of the sliding rail 500 is U-shaped. Reference is made to FIGS. 7 and 8 in combination with other drawings, the U-shaped structure of the sliding guide part 510 is disposed around the edge of the accommodating cavity 211, and both ends of the U-shaped structure extend in a direction parallel to the passage 130. The two bent parts 520 are respectively connected with two ends of the sliding guide part 510 distal to the accommodating cavity 211. Each bent part 520 is connected with a pin shaft 521 arranged in parallel with the rotating shaft 321, the two pin shafts 521 extend in opposite directions, in the present embodiment, one end of each pin shaft 521 is connected with the bent part 520, the other end of each pin shaft 521 extends away from the center of the passage 130, and the sliding rail 500 is rotatably mounted on the slider 220 of the capsule holder 200 through the pin shaft 521. The sliding guide part 510 is of a U-shaped structure, so that the area of the sliding rail 500 for bearing the capsule 700 is increased, and the process of bearing the capsule 700 by the sliding rail 500 is more reliable; moreover, the sliding rail 500 is also U-shaped, and the structure cooperates with the pin shaft 521 so that the sliding rail 500 is not easily disengaged after being mounted on the capsule holder 200.

With regard to the driving module, reference is made to FIG. 10 in combination with FIGS. 6, 7 and others, the driving module 600 is used to drive the sliding rail 500 to rotate when the injection module 300 is getting away from the capsule holder 200 in the preset direction, so that one end of the sliding rail 500 carried on the capsule holder 200 gets away from the capsule holder 200 and brings the capsule 700 out of the accommodating cavity 211. The driving module 600 includes a clamping hook 610 and a clamping strip 620, wherein the clamping hook 610 is arranged on the sliding rail 500 and includes a connecting part 611 and a hooking part 612, one end of the connecting part 611 is connected with the sliding guide part 510 of the sliding rail 500, the other end of the connecting part 611 extends to the connecting arm 320 of the injection module 300, and the hooking part 612 is arranged at one end, distal to the sliding rail 500, of the connecting part 611 on a side of the connecting part 611 proximate to the center of the passage 130. The clamping strip 620 is provided at the connecting arm 320 of the injection module 300, extends integrally in a direction parallel to the passage 130, and is located between the sliding rail 500 and the hooking part 612. At the brewing working position, the clamping strip 620 is positioned on a side of the hooking part 612 proximate to the capsule holder. When the injection module 300 is moving to the sliding-down working position under the drive of the power module 400, the clamping strip 620 can abut against the hooking part 612 of the clamping hook 610 and drive the sliding rail 500 to rotate along with the clamping hook 610, so that one end of the sliding rail 500 gets away from the capsule holder 200 and brings the capsule 700 out of the accommodating cavity 211; when the sliding rail 500 is rotated by a certain angle, the capsule 700 will slide down in the direction in which the sliding rail 500 extends under the action of gravity and fall into a designated container. And after the capsule 700 slides off, the sliding rail 500 continues to rotate along with the injection module 300 until the hooking part 612 of the clamping hook 610 moves to the end of the clamping strip 620 with respect to the clamping strip 620 and is disengaged with the clamping strip 620 (shown in FIG. 10), at which time, the sliding rail 500 rotates towards the capsule holder 200 under the action of gravity until the end proximate to the capsule holder 200 is carried on the capsule holder 200. During the movement of the injection module 300 from the sliding-down working position to the brewing working position under the drive of the power module 400, the clamping strip 620 first abuts against the hooking part 612 of the clamping hook 610, renders the clamping hook 610 to be opened in a direction away from the center of the passage 130 by the elasticity of the clamping hook 610, and then enables the return to the brewing working position by passing over the hooking part 612.

Further, the distance between the two hooking parts 612 becomes smaller in a direction from the hooking part 612 to the sliding guide part 510 to provide guide for the clamping strip 620 to pass over the hooking part 612, thereby preventing the clamping strip 620 from being directly pressed onto the hooking part 612 to damage the clamping hook 610.

It should be understood that even though the clamping hook 610 in the above embodiment is provided on the sliding rail 500 and the clamping strip 620 is provided on the injection module 300, this embodiment is not limited thereto; for example, in other embodiments, the clamping hook may also be provided on the injection module and extend in a direction towards the sliding rail, and accordingly, the clamping strip may be provided on the sliding rail between the injection module and the hooking part of the clamping hook.

Furthermore, in order to facilitate control of the power module 400 that can be stopped in time when the injection module 300 moves to the brewing working position, so that the injection module 300 can conduct the subsequent brewing process, the brewing device further includes a first sensor 330 and a controller (not shown), the first sensor 330 and the rotation mechanism 430 being both connected with the controller. Specifically, reference is made back to FIG. 2 in combination with the other drawings, the first sensor 330 is fixed to the side plate 110 and corresponds to the position of the second link 420. When the injection module 300 moves to the brewing working position, the second link 420 moves to abut against the first sensor 330 and triggers the first sensor 330; the controller controls the rotation mechanism 430 to stop operating in response to the trigger signal, and the injection module 300 stays stably at the brewing working position.

Similarly, in order to control the power module 400 to stop operating as required when the injection module 300 moves away from the capsule holder 200 until the sliding rail 500 disengages with the injection module 300, so as to ensure consistent displacements of the injection module 300 each time it moves away from the capsule holder 200, the brewing device further includes a second sensor 340, which is also connected with the controller. The second sensor 340 is fixed to the side plate 110 and corresponds to the position of the connecting arm 320. The second sensor 340 serves to abut against the connecting arm 320 of the injection module 300 and get triggered during rotation of the injection module 300 in a direction away from the capsule holder 200, so that the controller controls the rotation mechanism 430 to stop operating in response to the trigger signal, thereby stopping the movement of the injection module 300. It will be appreciated that the injection module 300 triggers the second sensor 340 after the sliding rail 500 disengages with the injection module 300.

It will be appreciated that the capsule 700 may be a coffee capsule or other capsules such as a fruit tea capsule, and the working mechanism of the brewing device according to the invention will be briefly described with reference to the drawings, taking the coffee capsule as an example.

In an initial state, the capsule holder 200 is accommodated in the passage 130, the capsule 700 is not provided in the accommodating cavity 211, and the injection module 300 is at the sliding-down working position.

When it is desired to brew coffee, at first, the push plate 230 is pulled until the accommodating cavity 211 is exposed out of the passage 130, the capsule 700 is filled in the accommodating cavity 211, and the push plate 230 is pushed until the position of the capsule 700 corresponds to the brewing working position. The power module 400 is then controlled to move the injection module 300 from the sliding-down working position to the brewing working position. After this, the injection module 300 is controlled to brew with the capsule 700. After the brewing is complete, the power module 400 is controlled to drive the injection module 300 to move from the brewing working position to the sliding-down working position; during the process, the sliding rail 500 rotates along with the injection module 300 under the drive of the driving module 600 and brings the capsule out of the accommodating cavity 211; when the sliding rail 500 rotates by a certain angle, the capsule 700 slides downwards along the extending direction of the sliding rail 500 and falls into a designated container; after the capsule 700 slides off, the sliding rail 500 continues to rotate along with the injection module 300 until the clamping hook 610 arranged on the sliding rail 500 is completely disengaged from the clamping strip 620 arranged on the injection module 300, and then the sliding rail 500 reversely rotates to the initial position under the action of gravity; injection module 300 continues to move to the sliding-down working position under the drive of power module 400. Until then, one cycle of brewing process is complete.

The brewing device provided by the present embodiment of the invention includes a base 100, a capsule holder 200, an injection module 300, a power module 400, a sliding rail 500 and a driving module, compared with a brewing device in a beverage machine currently available on the market. Wherein, the capsule holder 200 is provided with an accommodating cavity 211 for accommodating the capsule 700; one end of the sliding rail 500 is used for bearing the capsule 700, the other end of the sliding rail 500 is rotatably mounted on the capsule holder 200, and after the brewing process is complete, the driving module 600 can drive the sliding rail 500 to rotate along with the injection module 300 when the injection module 300 is getting away from the capsule holder 200 in a preset direction, so that the sliding rail 500 brings the capsule 700 out of the accommodating cavity 211 of the capsule holder 200, and the capsule 700 slides down the sliding rail 500 to a designated position. Therefore, the brewing device provided by the present embodiment of the invention can realize automatic recovery of the used capsule 700 without manual operation by a user, and effectively improves the user experience.

It should be understood that, in the present invention, the injection module 300 is rotated to get away from the capsule holder 200, but the invention is not limited thereto; for example, in other embodiments not covered by the appended set of claims, the injection module may be moved away from the capsule holder 200 in a translational manner in a direction of a depth of the accommodating cavity 211, and it will be appreciated that it is still possible to move the sliding rail 500 along with the injection module 300, and the preset direction mentioned above is the direction in which the injection module 300 is translated.

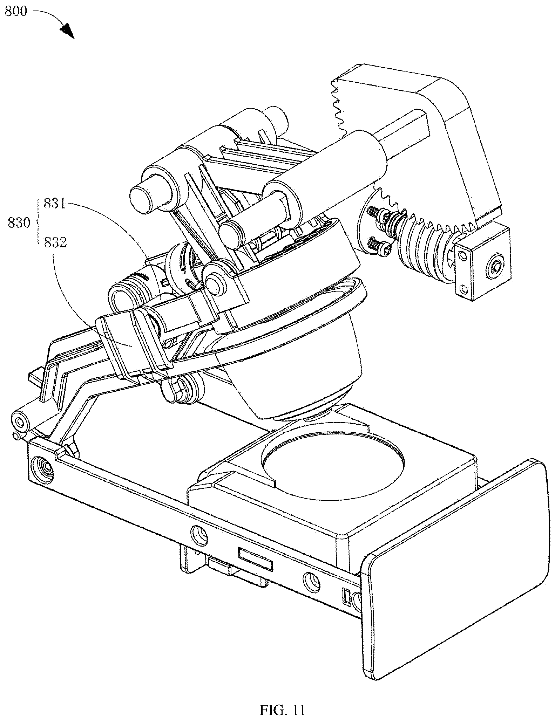

Reference is made to FIG. 11 which shows a perspective view of a brewing device 800 provided according to an embodiment of the invention in combination with FIGS. 1 to 10, the brewing device 800 differs from the brewing device in the first embodiment mainly in that:
the driving module 600 in the first embodiment includes a clamping hook 610 and a clamping strip 620, and the sliding rail 500 is driven by the cooperation of the clamping hook 610 and the clamping strip 620 to realize the recovery of the capsule 700; and
a driving module 830 in the present embodiment is not provided with a clamping hook or a clamping strip, but includes a first magnetic piece 831 and a second magnetic piece 832, and by means of mutual attraction of the first magnetic piece 831 and the second magnetic piece 832, the sliding rail is driven to rotate during movement of the injection module in a direction away from the capsule holder, thereby realizing recovery of the capsule 700.

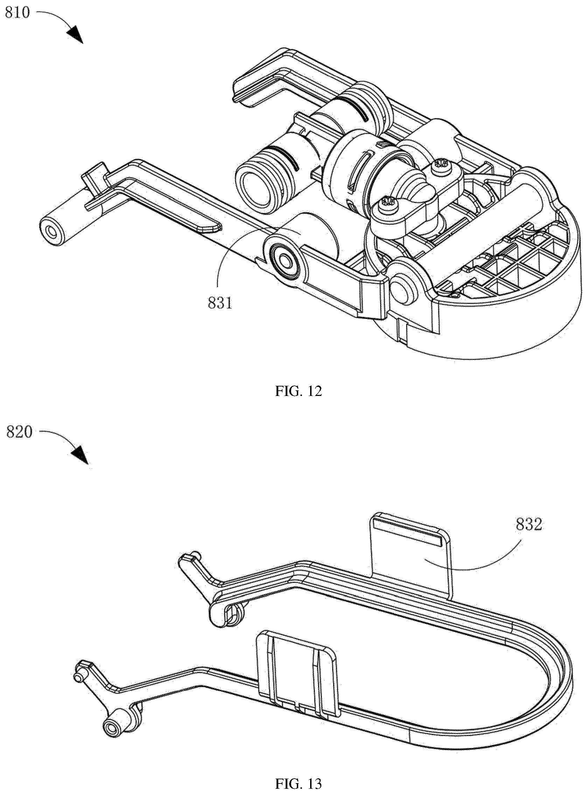

Specifically, reference is made to FIGS. 12 and 13 which respectively show a perspective view of an injection module 810 from one angle and a perspective view of a sliding rail 820 from one angle according to the present embodiment in combination with FIGS. 1 to 11, a first magnetic piece 831 is provided on the connecting arm of the injection module 810, and a second magnetic piece 832 is provided at the position of the sliding rail 820 corresponding to the first magnetic piece 831. One of the first magnetic piece 831 and the second magnetic piece 832 is an electromagnet which generates a magnetic field in a specific direction when powered on, and when the electromagnet is powered off, the magnetic field disappears; the other of the first magnetic piece 831 and the second magnetic piece 832 is a magnetic plate made of a magnetic material such as iron, cobalt, nickel or an alloy thereof. In the present embodiment, the first magnetic piece is an electromagnet and the second magnetic piece is a magnetic plate, and the brewing device is briefly described with reference to FIGS. 11 to 13.

One end of the magnetic plate is connected with the sliding rail 820, and the other end of the magnetic plate extends towards the connecting arm of the injection module 810 until corresponding to the electromagnet. When the injection module 810 rotates away from the capsule holder, the electromagnet is powered on, the magnetic plate and the sliding rail 820 rotate along with the injection module under the adsorption action of the electromagnet, so that the capsule is brought out of the accommodating cavity, and the capsule slides down the sliding rail to a designated position to realize the recovery of the capsule; when the sliding-down process is complete, the electromagnet is powered off, the gravitational field between the magnetic plate and the electromagnet disappears, and the sliding rail reversely rotates to the capsule holder and rests thereon under the action of gravity.

Compared with the first embodiment, the capsule recovery and the resetting of the sliding rail are realized by controlling the power-on and power-off of the electromagnet, the electromagnet and the magnetic plate can be not contacted, and the failure caused by repeated contact friction of structures such as hooks, clamping strips and the like can be avoided. the present embodiment where the first magnetic piece is a magnetic plate and the second magnetic piece is an electromagnet is substantially the same as the above-described embodiment and will not be described in detail herein.

It should be understood that, even though one of the first magnetic piece and the second magnetic piece is an electromagnet and the other is a magnetic plate in the above embodiment, the invention is not limited thereto; for example, in other embodiments of the invention, both the first magnetic piece and the second magnetic piece may be electromagnets. Specifically, during rotation of the injection module 810 in a direction away from the capsule holder, the first magnetic piece and the second magnetic piece are powered on, so that the polarity of the ends of the first magnetic piece and the second magnetic piece in proximity is opposite, and then the sliding rail rotates along with the injection module and recovers the capsule to a specified position; after the capsule recovery is complete, the first magnetic piece and the second magnetic piece are powered on, so that the polarity of the ends of the first magnetic piece and the second magnetic piece in proximity is the same, the sliding rail is reset under the repelling action of the first magnetic piece, the first magnetic piece and the second magnetic piece can be powered off at the same time, and then the sliding rail is reset under the action of gravity. For another example, in still other embodiments of the invention, one of the first magnetic piece and the second magnetic piece is an electromagnet, and the other of the first magnetic piece and the second magnetic piece is a magnet. During the rotation of the injection module in a direction away from the capsule holder, since the iron core of the electromagnet itself is a soft magnetic material, the first magnetic piece and the second magnetic piece are attracted to each other (apart from this, the first magnetic piece may also be powered on, so that the polarity of the ends of the first magnetic piece and the second magnetic piece in proximity is opposite, and then the first magnetic piece and the second magnetic piece can be attracted to each other), and therefore the sliding rail rotates along with the injection module and realizes capsule recovery; when the capsule is recovered, the first magnetic piece may be powered on, so that the polarity of the ends of the first magnetic piece and the second magnetic piece in proximity is the same, and then the sliding rail is reset under the repelling action between the first magnetic piece and the second magnetic piece.

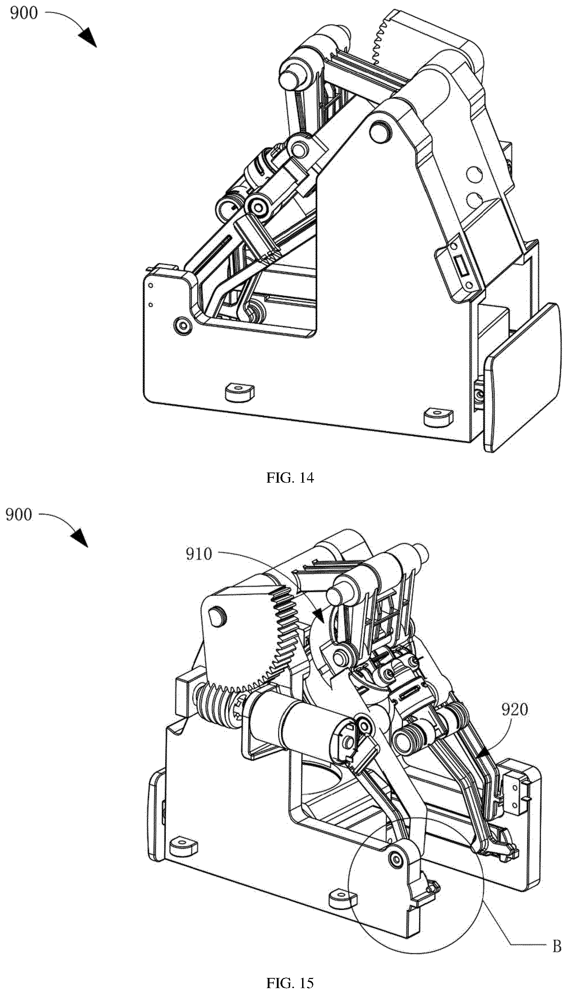

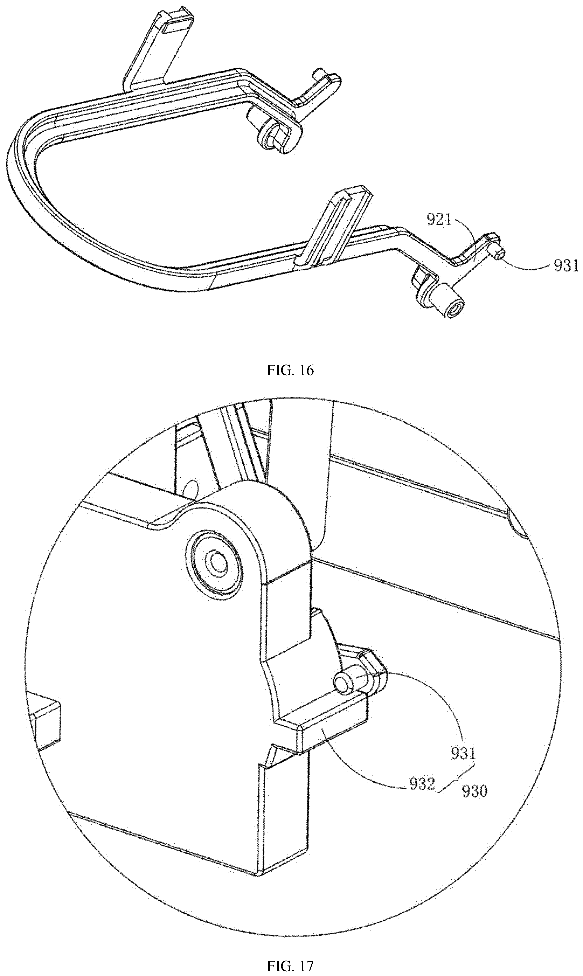

Reference is made to FIGS. 14 and 17 which respectively show a perspective view of a brewing device 900, and a perspective view of the sliding rail provided in yet another embodiment of the invention from two angles, as well as an enlarged view at B, in combination with FIGS. 1 to 13, the brewing device 900 differs from the brewing device 800 in the second embodiment mainly in that:
the driving module of the brewing device 800 in the second embodiment includes a first magnetic piece and a second magnetic piece, wherein the first magnetic piece is arranged on the injection module, the second magnetic piece is arranged on the sliding rail, one of the first magnetic piece and the second magnetic piece is an electromagnet, the other one of the first magnetic piece and the second magnetic piece is a magnetic plate, a magnet or an electromagnet which can be attracted by the electromagnet, and the recovery of the capsule is realized through the cooperation of the first magnetic piece and the second magnetic piece; and
the driving module of the brewing device 900 in the third embodiment still includes a first magnetic piece and a second magnetic piece, wherein the first magnetic piece is arranged on the injection module, and the second magnetic piece is arranged on the sliding rail, one of the first magnetic piece and the second magnetic piece is a magnet and the other is a magnetic plate made of a magnetic material such as iron, cobalt, nickel and the like or an alloy thereof. Hereinafter, for example, the first magnetic piece is a magnet and the second magnetic piece is a magnetic plate, and the present embodiment will be briefly described with reference to the accompanying drawings.

After the brewing is complete, when an injection module 910 rotates in a direction away from the capsule holder, the first magnetic piece and the second magnetic piece are attracted to each other, and then the second magnetic piece and a sliding rail 920 rotate along with the injection module 910 under the attraction of the first magnetic piece, so that the capsule is brought out of the accommodating cavity and slides down the sliding rail to a designated position to realize the recovery of the capsule. When the capsule needs to be refilled, the user only needs to pull out the capsule holder by means of the push plate, the second magnetic piece is displaced along with the capsule holder until the second magnetic piece is disengaged from the attraction of the first magnetic piece, and the sliding rail 920 is reset under the action of gravity.

Compared with the second embodiment, the brewing device provided by the present embodiment does not use an electromagnet, so that the cost of circuitry is reduced, and the electric energy can be saved to a certain extent.

Furthermore, the brewing device provided in the present embodiment can realize successfully capsule recovery through the cooperation of the first magnetic piece and the second magnetic piece, and the user experience is improved; however, after the capsule is recovered, the sliding rail cannot be automatically reset in time, but is passively reset in the process of pulling out the capsule holder. The reset process of the sliding rail is not stable because the force applied by the user each time can vary greatly, the sliding rail 920 may damage the injection module and the capsule holder when the force applied by the user is too vigorous. In order to eliminate such a defect, the brewing device provided by the present embodiment further includes a limiting module 930 used for preventing the sliding rail 920 from continuing to rotate along with the injection module 910 when the sliding rail 920 rotates away from the capsule holder for a set angular displacement, so that the sliding rail 920 is reset under the action of gravity. Notably, before the sliding rail 920 rotates for the preset angular displacement, the capsule has been recovered.

Specifically, reference is made to FIGS. 16 through 17 and in combination with FIGS. 1 through 15, the limiting module 930 includes a first limiting part 931 disposed on the sliding rail 920 and a second limiting part 932 disposed on the base, the first limiting part 931 and the second limiting part 932 abut against each other while the injection module 910 moves away from the capsule holder, so that the sliding rail 920 stops following the rotation of the injection module 910 and resets under the action of gravity. In the present embodiment, the first limiting part 931 is a limiting column connected with the bent part of the sliding rail 920 through a connecting column 921; one end of the connecting column 921 is connected with one end of the bent part distal to the sliding guide part, the other end of the connecting column 921 extends away from the sliding guide part and simultaneously extends upwards, the limiting column is arranged at one end of the connecting column 921 distal to the bent part and extends in parallel with the pin shaft; the second limiting part 932 is a limiting plate horizontally fixed at one end, distal to the push plate of the capsule holder, of the side plate. When the injection module 910 is in the brewing state, the limiting column is positioned above the limiting plate, and when the injection module moves to the sliding-down working position, the limiting column rotates to abut against the limiting plate with the pin shaft as a rotation center, so that the sliding rail 920 does not move along with the injection module any longer, and the sliding rail can be reset under the action of gravity.

It should be understood that, in other embodiments of the invention, the first limiting part and the second limiting part may be of other structures, for example, the first limiting part is a limiting plate, and correspondingly, the second limiting part is a limiting column, as long as the first limiting part and the second limiting part are used for cooperating together to prevent the sliding rail 920 from continuing to rotate with the injection module when the sliding rail 920 rotates a preset angular displacement in a direction away from the capsule holder; the limit module may also be applied to the second embodiment to prevent the sliding rail 920 from continuing to rotate with the injection module when the slide rotates a preset angular displacement away from the capsule holder.

It should also be understood that, in other embodiments of the invention, the first magnetic piece and the second magnetic piece may each be a magnet, and a substantially the same manner as the above embodiment by which capsule recovery and sliding rail resetting are accomplished is provided, and thus such an embodiment will not be described in detail herein. Moreover, it can be seen by referring to the above second embodiment that the combination of the first magnetic piece and the second magnetic piece is various, so long as it is ensured that the first magnetic piece and the second magnetic piece can be mutually attracted when the injection module is getting away from the capsule holder in the preset direction, and thus one end, proximate to the cup holder, of the sliding rail gets away from the capsule holder to complete the recovery of the capsule.

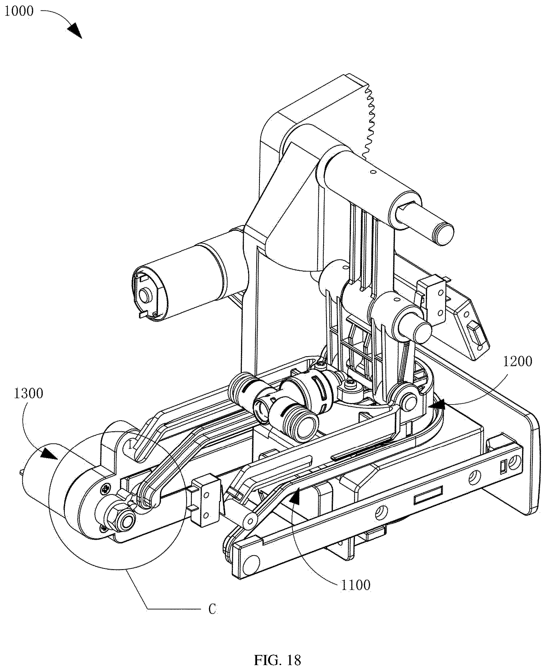

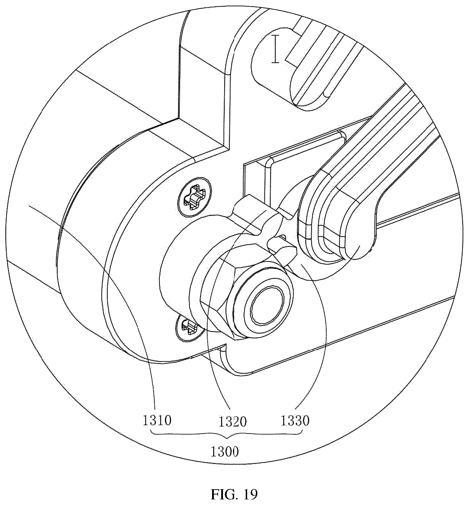

Reference is made to FIGS. 18 and 19 which show a perspective view of a brewing device 1000 according to still another embodiment with the side plate not shown, said embodiment not being part of the present invention; and a partially enlarged view at C, in combination with FIGS. 1 to 17, the brewing device 1000 differs from the brewing devices of the first, second and third embodiments in that:
the driving module of the brewing device in the first embodiment includes a clamping hook and a clamping strip, and the driving module of the brewing devices in the second embodiment and the third embodiment include a first magnetic piece and a second magnetic piece;
while a driving module 1300 in the present embodiment includes a rotation mechanism 1310 having an output connected with a sliding rail 1200, for driving the sliding rail 1200 to rotate during the movement of the injection module 1100 away from the capsule holder so that the sliding rail 1200 brings the capsule out of the accommodating cavity and slides it to a designated position, the rotation mechanism 1310 is also used for driving the sliding rail 1200 to reset after the capsule is successfully recovered. In the present embodiment, the rotation mechanism 1310 is an electric motor, and it will be appreciated that in other embodiments of the invention, the rotation mechanism 1310 may also be a rotary cylinder or other mechanisms capable of rendering a rotational output, which is not limited herein.

Furthermore, in order to avoid interference between the sliding rail 1200 and the injection module 1100 due to too high rotation speed of the output of the rotation mechanism 1310, the driving module further includes a first gear 1320 and a second gear 1330, wherein the first gear 1320 is fixedly connected with the output end of the rotation mechanism 1310, and the second gear 1330 is coaxially sleeved on the pin shaft of the sliding rail 1200, that is, the rotation mechanism 1310 changes speed by means of the first gear 1320 and the second gear 1330, so that the sliding rail 1200 can have an appropriate rotation speed, capable of taking out the capsule and avoiding interference with the injection module 1100.

According to the brewing device provided by the present embodiment of the invention, the self-service recovery of the capsule can also be realized, and the user experience can be effectively improved.

On the basis of the same concept, the invention also provides a beverage machine including a housing and the brewing device as provided in any of the above embodiments. By advantage of the brewing device, the beverage machine can realize self-service recovery of the capsule, and the user experience can be effectively improved.

Finally, it should be noted that the above examples are intended only to illustrate the technical solutions of the invention; although the invention has been described in detail with reference to the foregoing embodiments, those skilled in the art will appreciate that the technical solutions of the above embodiments can still be modified within the scope of the invention as defined by the appended set of claims, or some of the technical features thereof may found their equivalents within the scope of the invention as defined by the appended set of claims.

## Claims

1. A brewing device, comprising:
a base;
a capsule holder, the capsule holder being provided on the base;
an injection module, the injection module being movably connected with the base and able to get close to or away from the capsule holder along a preset direction;
a sliding rail, the sliding rail having one end thereof carried on the capsule holder and the other end thereof rotatably mounted on the capsule holder; and
a driving module, the driving module being configured to drive the sliding rail to rotate when the injection module is getting away from the capsule holder along the preset direction, so that one end of the sliding rail carried on the capsule holder gets away from the capsule holder;
**characterized in that** the driving module comprises:
a first magnetic piece, provided on the injection module; and
a second magnetic piece, provided on the sliding rail and corresponds to the first magnetic piece;
wherein the first magnetic piece and the second magnetic piece are attracted to each other when the injection module is getting away from the capsule holder along the preset direction for driving the sliding rail to rotate.

2. The brewing device according to claim 1, **characterized in that**:
one of the first magnetic piece and the second magnetic piece is an electromagnet, the other of the first magnetic piece and the second magnetic piece is a magnetic plate, and the magnetic plate is a magnetic material;
alternatively, both the first magnetic piece and the second magnetic piece are electromagnets;
alternatively, one of the first magnetic piece and the second magnetic piece is an electromagnet, and the other of the first magnetic piece and the second magnetic piece is a magnet.

3. The brewing device according to claim 1, **characterized in that**:
one of the first magnetic piece and the second magnetic piece is a magnet, the other of the first magnetic piece and the second magnetic piece is a magnetic plate, and the magnetic plate is a magnetic material;
alternatively, both the first magnetic piece and the second magnetic piece are magnets.

4. The brewing device according to claim 2 or 3,
**characterized by** further comprising a limiting module, the limiting module comprises a first limiting part and a second limiting part, wherein the first limiting part is provided on the sliding rail, and the second limiting part is provided on the base;
the first limiting part and the second limiting part abut against each other when the sliding rail rotates by a set angular displacement away from the capsule holder for preventing the sliding rail from rotating along with the injection component.

5. The brewing device according to any of claims 1 to 4,
**characterized in that** the injection module comprises an injection component and a connecting arm, one end of the connecting arm is fixedly connected with the injection component, and the other end of the connecting arm is rotatably mounted on the base;
the first magnetic piece is provided on the connecting arm.

6. The brewing device according to claim 1, **characterized in that** the driving module comprises a motor, and an output shaft of the motor is connected with the sliding rail.

7. The brewing device according to any of claims 1 to 6,
**characterized in that** the sliding rail comprises a sliding guide part and a bent part, and one end, proximate to the injection module, of the capsule holder is provided with an accommodating cavity;
one end of the sliding guide part is carried on the capsule holder and disposed at an edge of the accommodating cavity, and the other end of the sliding guide part extends in a direction away from the accommodating cavity;
one end of the bent part is connected with one end, distal to the accommodating cavity, of the sliding guide part, the other end of the bent part extends towards a bottom of the base, and the bent part is rotatably mounted on the capsule holder.

8. The brewing device according to any of claims 1 to 7,
**characterized by** further comprising a power module, wherein the power module comprises a first link, a second link and a rotation mechanism, one end of the first link is rotatably mounted on the injection module, the other end of the first link is rotatably connected with the second link, and an output end of the rotation mechanism is connected with the second link and configured to drive the second link to rotate;
the injection module is rotatably mounted on the base.

9. The brewing device according to claim 8, **characterized in that** the power module further comprises:
a worm gear, coaxially and fixedly connected with a worm gear shaft rotatably mounted on the base; and
a worm, matched with the worm gear and connected with the output end of the rotation mechanism;
wherein the second link is sleeved on and fixed with the worm gear shaft.

10. A beverage machine, **characterized by** comprising the brewing device according to any of claims 1 to 9 and a housing.

## Patentansprüche

1. Eine Brühvorrichtung, umfassend:
einen Sockel;
einen Kapselhalter, wobei der Kapselhalter auf dem Sockel vorgesehen ist;
ein Injektionsmodul, wobei das Injektionsmodul beweglich mit dem Sockel verbunden ist und sich entlang einer vorgegebenen Richtung dem Kapselhalter nähern oder von diesem entfernen kann;
eine Führungsschiene, wobei die Führungsschiene mit einem Ende am Kapselhalter getragen und mit dem anderen Ende drehbar am Kapselhalter montiert ist; und
ein Antriebsmodul, wobei das Antriebsmodul so konfiguriert ist, dass es die Führungsschiene antreibt, zu rotieren, wenn sich das Injektionsmodul entlang der vorgegebenen Richtung vom Kapselhalter entfernt, sodass ein Ende der Führungsschiene, das am Kapselhalter getragen wird, sich vom Kapselhalter entfernt;
**dadurch gekennzeichnet, dass** das Antriebsmodul umfasst:
ein erstes Magnetteil, das am Injektionsmodul angebracht ist; und
ein zweites Magnetteil, das an der Führungsschiene angebracht ist und dem ersten Magnetteil entspricht;
wobei das erste Magnetteil und das zweite Magnetteil einander angezogen werden, wenn sich das Injektionsmodul entlang der vorgegebenen Richtung vom Kapselhalter entfernt, um die Führungsschiene zum Rotieren zu bringen.

2. Die Brühvorrichtung nach Anspruch 1, **dadurch gekennzeichnet, dass**:
eines der ersten Magnetteile und des zweiten Magnetteils ein Elektromagnet ist, das andere der ersten Magnetteile und des zweiten Magnetteils eine Magnetplatte ist, und die Magnetplatte aus magnetischem Material besteht;
alternativ sowohl das erste Magnetteil als auch das zweite Magnetteil Elektromagnete sind;
alternativ eines der ersten Magnetteile und des zweiten Magnetteils ein Elektromagnet ist, und das andere der ersten Magnetteile und des zweiten Magnetteils ein Magnet ist.

3. Die Brühvorrichtung nach Anspruch 1, **dadurch gekennzeichnet, dass**:
eines der ersten Magnetteile und des zweiten Magnetteils ein Magnet ist, das andere der ersten Magnetteile und des zweiten Magnetteils eine Magnetplatte ist, und die Magnetplatte aus magnetischem Material besteht;
alternativ sowohl das erste Magnetteil als auch das zweite Magnetteil Magnete sind.

4. Die Brühvorrichtung nach Anspruch 2 oder 3, **dadurch gekennzeichnet, dass** sie weiterhin ein Begrenzungsmodul umfasst, wobei das Begrenzungsmodul einen ersten Begrenzungsteil und einen zweiten Begrenzungsteil umfasst, wobei der erste Begrenzungsteil an der Führungsschiene angebracht ist und der zweite Begrenzungsteil am Sockel vorgesehen ist;
der erste Begrenzungsteil und der zweite Begrenzungsteil aneinander anliegen, wenn die Führungsschiene um einen vorgegebenen Winkelversatz vom Kapselhalter weg rotiert, um zu verhindern, dass die Führungsschiene zusammen mit dem Injektionsmodul rotiert.

5. Die Brühvorrichtung nach einem der Ansprüche 1 bis 4, **dadurch gekennzeichnet, dass** das Injektionsmodul eine Injektionseinheit und einen Verbindungsarm umfasst, wobei ein Ende des Verbindungsarms fest mit der Injektionseinheit verbunden ist und das andere Ende drehbar am Sockel montiert ist;
das erste Magnetteil ist am Verbindungsarm angebracht.

6. Die Brühvorrichtung nach Anspruch 1, **dadurch gekennzeichnet, dass** das Antriebsmodul einen Motor umfasst und eine Ausgangswelle des Motors mit der Führungsschiene verbunden ist.

7. Die Brühvorrichtung nach einem der Ansprüche 1 bis 6, **dadurch gekennzeichnet, dass** die Führungsschiene einen Gleitführungsteil und einen gebogenen Teil umfasst, und ein dem Injektionsmodul zugewandtes Ende des Kapselhalters mit einer Aufnahmekavität versehen ist;
ein Ende des Gleitführungsteils ist am Kapselhalter angebracht und an einem Rand der Aufnahmekavität positioniert, und das andere Ende des Gleitführungsteils erstreckt sich in eine Richtung der Aufnahmekavität weg;
ein Ende des gebogenen Teils ist mit dem Aufnahmekavität abgewandten Ende des Gleitführungsteils verbunden, das andere Ende des gebogenen Teils erstreckt sich in Richtung des Bodens des Sockels, und der gebogene Teil ist drehbar am Kapselhalter montiert.

8. Die Brühvorrichtung nach einem der Ansprüche 1 bis 7, **dadurch gekennzeichnet, dass** sie weiterhin ein Leistungsmodul umfasst, wobei das Leistungsmodul einen ersten Hebel, einen zweiten Hebel und einen Rotationsmechanismus umfasst, wobei ein Ende des ersten Hebels drehbar am Injektionsmodul montiert ist, das andere Ende des ersten Hebels drehbar mit dem zweiten Hebel verbunden ist, und ein Ausgangsende des Rotationsmechanismus mit dem zweiten Hebel verbunden ist und so konfiguriert ist, den zweiten Hebel anzutreiben;
das Injektionsmodul ist drehbar am Sockel montiert.

9. Die Brühvorrichtung nach Anspruch 8, **dadurch gekennzeichnet, dass** das Leistungsmodul weiterhin umfasst:
ein Schneckenrad, das koaxial und fest mit einer Schneckenradwelle verbunden ist, die drehbar am Sockel montiert ist; und
eine Schnecke, die zum Schneckenrad passt und mit dem Ausgangsende des Rotationsmechanismus verbunden ist;
wobei der zweite Hebel auf der Schneckenradwelle sitzt und fest mit dieser verbunden ist.

10. Ein Getränkeautomat, **dadurch gekennzeichnet, dass** er die Brühvorrichtung nach einem der Ansprüche 1 bis 9 und ein Gehäuse umfasst.

## Revendications

1. Un dispositif de préparation, comprenant :
une base ;
un support de capsule, le support de capsule étant disposé sur la base ;
un module d'injection, le module d'injection étant relié de manière mobile à la base et capable de se rapprocher ou de s'éloigner du support de capsule selon une direction prédéfinie ;
un rail coulissant, le rail coulissant ayant une de ses extrémités portées par le support de capsule et l'autre extrémité montée de manière rotative sur le support de capsule ; et
un module d'entraînement, le module d'entraînement étant configuré pour entraîner le rail coulissant à pivoter lorsque le module d'injection s'éloigne du support de capsule selon la direction prédéfinie, de sorte qu'une extrémité du rail coulissant portée par le support de capsule s'éloigne du support de capsule ;
**caractérisé en ce que** le module d'entraînement comprend :
une première pièce magnétique, disposée sur le module d'injection ; et
une deuxième pièce magnétique, disposée sur le rail coulissant et correspondant à la première pièce magnétique ;
dans lequel la première pièce magnétique et la deuxième pièce magnétique s'attirent mutuellement lorsque le module d'injection s'éloigne du support de capsule selon la direction prédéfinie pour entraîner la rotation du rail coulissant.

2. Le dispositif de préparation selon la revendication 1, **caractérisé en ce que** :
l'une de la première pièce magnétique et de la deuxième pièce magnétique est un électroaimant, l'autre de la première pièce magnétique et de la deuxième pièce magnétique est une plaque magnétique, et la plaque magnétique est un matériau magnétique ;
alternativement, la première pièce magnétique et la deuxième pièce magnétique sont toutes deux des électroaimants ;
alternativement, l'une de la première pièce magnétique et de la deuxième pièce magnétique est un électroaimant, et l'autre de la première pièce magnétique et de la deuxième pièce magnétique est un aimant.

3. Le dispositif de préparation selon la revendication 1, **caractérisé en ce que** :
l'une de la première pièce magnétique et de la deuxième pièce magnétique est un aimant, l'autre de la première pièce magnétique et de la deuxième pièce magnétique est une plaque magnétique, et la plaque magnétique est un matériau magnétique ;
alternativement, la première pièce magnétique et la deuxième pièce magnétique sont toutes deux des aimants.

4. Le dispositif de préparation selon la revendication 2 ou 3, **caractérisé en ce qu'**il comprend en outre un module de limitation, le module de limitation comprenant une première partie de limitation et une deuxième partie de limitation, dans lequel la première partie de limitation est disposée sur le rail coulissant, et la deuxième partie de limitation est disposée sur la base ;
la première partie de limitation et la deuxième partie de limitation viennent en butée l'une contre l'autre lorsque le rail coulissant pivote d'un déplacement angulaire défini loin du support de capsule afin d'empêcher le rail coulissant de pivoter avec le module d'injection.

5. Le dispositif de préparation selon l'une des revendications 1 à 4, **caractérisé en ce que** le module d'injection comprend un composant d'injection et un bras de liaison, une extrémité du bras de liaison étant fixée de manière permanente au composant d'injection, et l'autre extrémité du bras de liaison étant montée de manière rotative sur la base ;
la première pièce magnétique est disposée sur le bras de liaison.

6. Le dispositif de préparation selon la revendication 1, **caractérisé en ce que** le module d'entraînement comprend un moteur, et un arbre de sortie du moteur est relié au rail coulissant.

7. Le dispositif de préparation selon l'une des revendications 1 à 6, **caractérisé en ce que** le rail coulissant comprend une partie de guidage coulissante et une partie coudée, et une extrémité, proche du module d'injection, du support de capsule est pourvue d'une cavité d'accueil ;
une extrémité de la partie de guidage coulissante est portée par le support de capsule et disposée à un bord de la cavité d'accueil, et l'autre extrémité de la partie de guidage coulissante s'étend dans une direction s'éloignant de la cavité d'accueil ;
une extrémité de la partie coudée est reliée à une extrémité, éloignée de la cavité d'accueil, de la partie de guidage coulissante, l'autre extrémité de la partie coudée s'étend vers le fond de la base, et la partie coudée est montée de manière rotative sur le support de capsule.

8. Le dispositif de préparation selon l'une des revendications 1 à 7, **caractérisé en ce qu'**il comprend en outre un module d'alimentation, dans lequel le module d'alimentation comprend une première liaison, une deuxième liaison et un mécanisme de rotation, une extrémité de la première liaison étant montée de manière rotative sur le module d'injection, l'autre extrémité de la première liaison étant reliée de manière rotative à la deuxième liaison, et une extrémité de sortie du mécanisme de rotation étant reliée à la deuxième liaison et configurée pour entraîner la rotation de la deuxième liaison ;
le module d'injection est monté de manière rotative sur la base.

9. Le dispositif de préparation selon la revendication 8, **caractérisé en ce que** le module d'alimentation comprend en outre :
une roue à vis sans fin, reliée de manière coaxiale et fixe à un arbre de roue à vis sans fin monté de manière rotative sur la base ; et
une vis sans fin, associée à la roue à vis sans fin et reliée à l'extrémité de sortie du mécanisme de rotation ;
dans lequel la deuxième liaison est montée et fixée sur l'arbre de roue à vis sans fin.

10. Une machine à boissons, **caractérisée en ce qu'**elle comprend le dispositif de préparation selon l'une des revendications 1 à 9 et un boîtier.
